# EUROPEAN PATENT APPLICATION

(11) **EP 1 612 111 A2**
(43) Date of publication of application: **04.01.2006**
(21) Application number: 05014300.7
(22) Date of filing: 30.06.2005
(51) Int. Cl.: B60R 21/16, B09B 3/00

(54) **Vehicular occupant protection device deployment apparatus and confirming method of battery voltage therefor**

(30) Priority: 02.07.2004 JP 2004197164
(71) Applicant: NISSAN MOTOR CO., LTD., Yokohama-shi, Kanagawa 221-0023 (JP)
(72) Inventor: Yamazaki, Tomohiro, Sagamihara-shi Kanagawa 229-0034 (JP); Kawaguchi, Shinichi, Yamato-shi Kanagawa 242-0002 (JP); Terouchi, Suguru c/o Idec Izumi Corporation, Osaka-shi Osaka 532-8550 (JP)
(74) Representative: Schmitz, Hans-Werner

(57) **Abstract**

In vehicular occupant protection device deployment apparatus and battery voltage confirming method for the vehicular occupant protection device deployment apparatus, a battery power supply is provided, a charge circuit is provided to boost a voltage across the battery power supply and charge a capacitor with the boosted voltage, a battery voltage detecting section detects the voltage across the battery power supply, and a control section is provided to operate the charge circuit and input a detected voltage value of the battery power supply from the battery power supply detecting section when an electric power is supplied to the apparatus and to confirm whether the voltage across the battery power supply during an operation state of the charge circuit obtained by the battery voltage detecting section is higher than a predetermined voltage required at minimum for the deployment process.

## Description

### BACKGROUND OF THE INVENTION:

### Field of the invention

The present invention relates to a vehicular occupant protection device deployment apparatus used for a vehicular occupant protection device such as an air bag system and/or a seat belt pretensioner system to be disposed of and a voltage confirmation method for a battery power supply equipped in the vehicular occupant protection device deployment apparatus. The vehicular occupant protection device deployment apparatus carries out a deployment (expansion) process for a vehicular occupant protection device by means of a squib direct power supply method in which a plurality of squibs are connected to the apparatus and a squib ignition purpose voltage is supplied to each of the squibs.

### Description of the related art

A Japanese Patent Application First Publication (Tokkai) Heisei 8-30801 published on March 26, 1996 exemplifies a previously proposed air bag module deployment apparatus which can activate an inflator without removing an air bag module from a vehicular steering wheel when the air bag module is disposed of (scrapped).

### SUMMARY OF THE INVENTION:

However, since, in the above-described Japanese Patent Application First Publication, an on-board (or an in-vehicle) power supply and an Electronic Control Unit (ECU) are used, during a scrap of the air bag module, the inflator cannot be activated in a case where the on-board power supply (the vehicular battery) is deteriorated or the ECU is broken down.

It is, therefore, an object of the present invention to provide an vehicular occupant protection device deployment apparatus and a method of confirming a voltage of a battery power supply which is used in the vehicular occupant protection device deployment apparatus which can scrap the vehicular occupant protection device such as air bag modules and pretensioners even in a case where a deterioration of the on-board power supply and/or the break-down of the ECU occurs by performing a deployment (expansion) process through a squib direct power supply method in which squibs are directly connected to the vehicular occupant protection device deployment apparatus and squib ignition purpose voltages are supplied to the respective squibs without use of the on-board power supply and the ECU.

According to one aspect of the present invention, there is provided a vehicular occupant protection device deployment apparatus, comprising: at least one squib; a battery power supply; a capacitor to supply a squib ignition purpose voltage for the squib for the vehicular occupant protection device deployment apparatus to carry out a deployment process of the vehicular occupant protection device; a charge circuit to boost a voltage across the battery power supply and charge the capacitor with the boosted voltage; a battery voltage detecting section that detects the voltage across the battery power supply; and a control section to operate the charge circuit, input a detected voltage value of the battery power supply from the battery power supply detecting section when an electric power is supplied to the apparatus, and confirm whether the voltage across the battery power supply during an operation state of the charge circuit obtained by the battery voltage detecting section is higher than a predetermined voltage required at minimum for the deployment process.

According to another aspect of the present invention, there is provided a battery voltage confirming method for a vehicular occupant protection device deployment apparatus, the vehicular occupant protection device deployment apparatus comprising: a battery power supply; a capacitor; and a charge circuit which boosts the voltage of the battery power supply and charges the capacitor with the boosted voltage; a control section that performs a deployment process of the vehicular occupant protection device by supplying a squib ignition purpose voltage to a connected squib and the battery confirming method comprising: operating the charge circuit at a time at which an electric power is supplied to the apparatus; detecting a voltage across the battery power supply during the operation of the charge circuit; and confirming whether the detected voltage across the battery is higher than a predetermined voltage required at minimum for the deployment process.

This summary of the invention does not necessarily describe all necessary features so that the invention may also be a sub-combination of these described features.

### BRIEF DESCRIPTION OF THE DRAWINGS:

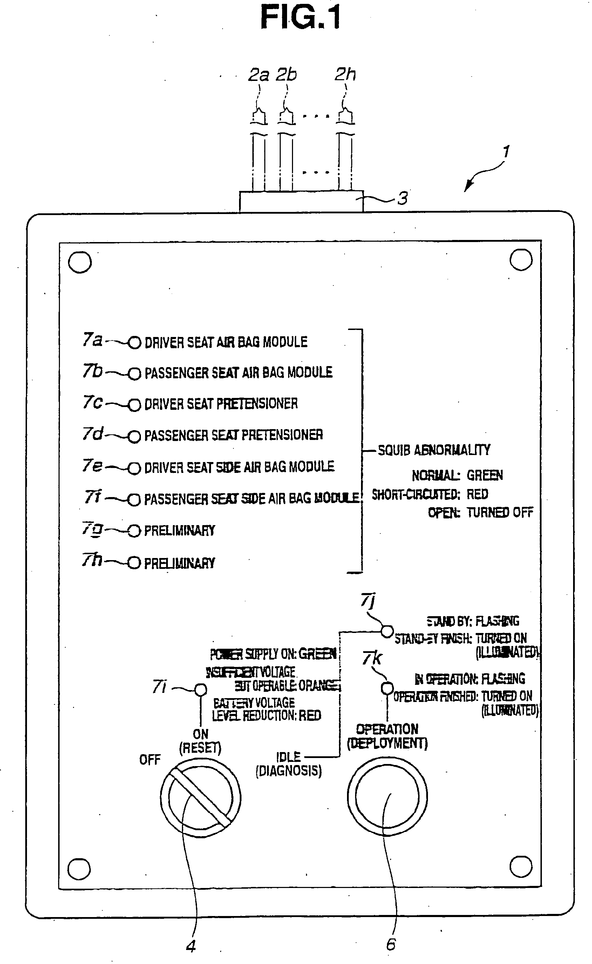

Fig.1 is a plan view representing an outer appearance of a vehicular occupant protection device deployment apparatus in a preferred embodiment according to the present invention.

Fig- 2 is a side view of the vehicular occupant protection device deployment apparatus in the embodiment shown in Fig. 1.

Fig. 3 is a schematic circuit block diagram representing an electrical structure of the vehicular occupant protection device deployment apparatus in the embodiment shown in Figs. 1 and 2.

Fig. 4 is a schematic circuit block diagram representing a specific structure of a control circuit shown in Fig. 3.

Fig. 5 is a flowchart representing a battery voltage confirmation process in the vehicular occupant protection device deployment apparatus in the preferred embodiment according to the present invention shown in Fig. 1.

Fig. 6 is a flowchart representing a squib diagnosis-and-deployment process in the vehicular occupant protection device deployment apparatus shown in Fig. 1.

### DETAILED DESCRIPTION OF THE PREFERRED EMBODIMENT:

Reference will hereinafter be made to the drawings in order to facilitate a better understanding of the present invention.

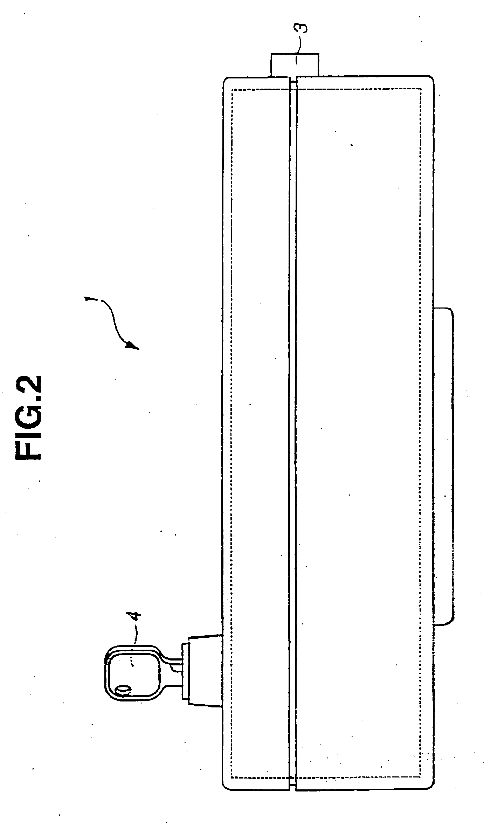

Fig. 1 shows a plan view representing an outer appearance of the vehicular occupant protection device deployment apparatus in a preferred embodiment according to the present invention. The present invention is not limited to the preferred embodiment described below. Fig. 2 shows a side view of the vehicular occupant protection device deployment apparatus in the preferred embodiment according to the present invention. A vehicular occupant protection device deployment apparatus 1 uses a squib direct power supply method as a deployment method.

Thus, a connector portion 3 is provided on an upper portion of vehicular occupant protection device deployment apparatus 1 as viewed from Fig. 1 to directly connect a plurality of squibs 2a through 2h (as a general reference numeral, 2) to vehicular occupant protection device deployment apparatus 1. In addition, a mode select switch operational piece 4 and a deployment purpose operational button 6 to execute a deployment process using the squibs are equipped on a surface (panel) of vehicular occupant protection device deployment apparatus 1.

Mode select switch operational piece 4 is used to selectively switch an operation mode of vehicular occupant protection device deployment apparatus 1 into any one of a power OFF mode (power supply is turned off), a power supply ON mode (power supply is turned on), and an idle (diagnosis) mode. A state in which mode select switch operational piece 4 is inserted into the surface is a power supply OFF mode, a state in which mode select switch operational piece 4 is turned to some degree in a rightward direction as viewed from Fig. 1 is a power supply ON mode, and a state in which mode select switch operational piece 4 is turned further in a more rightward direction is the idle (diagnosis) mode.

On the other hand, when deployment purpose operational button 6 is pushed during a setting of a diagnosis-and-deployment mode.

Vehicular occupant protection device deployment apparatus 1 in the preferred embodiment is designed to be connectable to eight squibs 2a through 2h and can perform a collective deployment process. Therefore, in order to visually inform an operator of a normality or abnormality of each squib 2a through 2h, a plurality of display lamps 7a through 7h (as a general reference numeral, 7) constituted by, for example, LEDs (Light Emitting Diodes) are provided on the surface of vehicular occupant protection device deployment apparatus 1. From among display lamps, display lamp 7a is used for the squib for a driver seat air bag module, display lamp 7b is used for the squib for a passenger seat air bag module, display lamp 7c is used for the squib for a driver seat pretenzioner, display lamp 7d is used for the squib for a passenger seat pretensioner, display lamp 7e is used for the squib for a driver seat side air bag module, and display lamp 7f is used for the squib for a passenger seat side air bag module, and display lamps 7g, 7h are used for preliminary squibs. It is noted that each display lamp 7a through 7h is illuminated in green (a green color) (turned on) when the corresponding squib 2 is normal, is illuminated in red (a red color) when the corresponding squib 2 is short-circuited, and is tuned off when the corresponding squib 2 is open.

Furthermore, in relation to mode select switch operational piece 4 and deployment purpose operational button 6, a power supply purpose display lamp 7i, a stand-by purpose display lamp 7j, and in operation purpose display lamp 7k are provided on the surface of vehicular occupant protection device deployment apparatus 1. Power supply purpose display lamp 7i is illuminated in green (green color) when a battery voltage is normal (usable state), is illuminated in an orange color when the battery voltage is reduced (unusable state), and illuminated in red (red color) when the battery voltage fails.

In addition, stand by purpose display lamp 7j is flashed during a squib diagnosis and turned on when the squib diagnosis is finished. In addition, after operation (deployment) button 6 is pushed, stand by purpose display lamp 7j is continued to be turned on and, when a power supply (deployment) is started, stand by purpose display lamp 7j is turned off.

In operation purpose display lamp 7k is flashed after a start of an operation (deployment) process (after one second after operational button 6 is pushed), is illuminated when the operation is finished (including a stop in a midway through this operation), and is held in its state once the operation (illumination) is started until it is returned to ON (a reset mode).

As described above, vehicular occupant protection device deployment apparatus 1 is configured to inform the operator through a visual inspection of a result of diagnosis of the squibs, a deployment process state, and so forth.

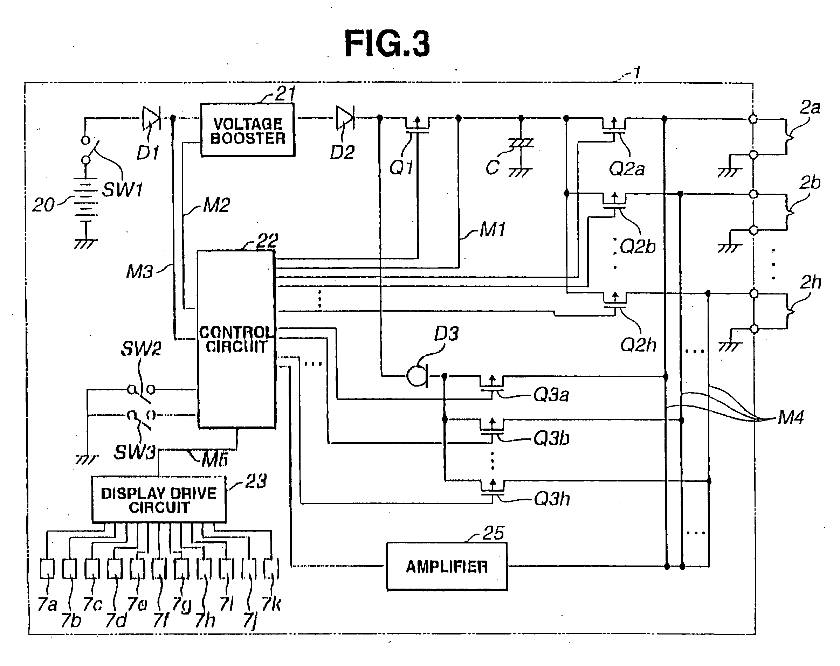

Fig. 3 shows a circuit block diagram representing an electrical structure of vehicular occupant protection device deployment apparatus 1. Vehicular occupant protection device deployment apparatus 1 includes: a battery power supply 20 (in this embodiment, four of batteries, each battery having an open circuit voltage of 1.4 v (volts) and a nominal voltage of 1.2 V (volts); a capacitor C supplying squib ignition purpose voltages to the squibs; a voltage booster 21 to boost the voltage of battery power supply 20 (in this embodiment, 12 volts); a control circuit 22; and display drive circuits 23 to drivingly display the plurality of display lamps 7a through 7k.

In Fig. 3, SW1 denotes a power supply ON mode purpose switch of mode select switch operational piece 4, SW2 denotes an idle (diagnosis) mode purpose switch of mode select switch operational piece 4, and SW3 denotes a deployment mode purpose switch which is turned to ON in response to the push operation of operational button 6. In addition, in Fig. 3, D1 and D2 denote reverse current flow prevention purpose diodes and D3 denote a constant current diode (ordinarily called, a current regulative diode (CRD). Current regulative diode D3 functions to cause a constant current to flow through a corresponding one of squibs 2a through 2h.

In addition, in Fig. 3, Q1 denotes a switching (purpose) transistor whose ON and OFF are controlled by means of control circuit 22. When switching transistor Q1 is turned to ON, a voltage from booster (voltage boosting circuit) 21 starts a charge in capacitor C. Then, a charge voltage across capacitor C is detected by control circuit 22 via a line M1. Then, booster 21 is in a voltage boost drivable state when a boost allowance signal is supplied via a line M2 from control circuit 22. It is noted that a voltage across battery power supply 20 is directly detected by control circuit 22 via a line M3 .

In Fig. 3, Q2a through Q2h denote switching transistors whose UN and OFF are controlled by means of control circuit 22. When any one of switching transistors Q2a through Q2h (as a general reference numeral, Q2) is turned to ON, the squib ignition purpose voltage from capacitor C is supplied to the corresponding one of squibs 2 and the deployment for the corresponding squib 2a through 2h as will be described later is executed.

In addition, in Fig. 3, Q3a through Q3h (as a general reference numeral, Q3) denote switching transistors whose ON and OFF are controlled by control circuit 22- When any one of switching transistors Q3a through Q3h is turned to ON, the constant current from current regulative diode D3 is caused to flow through the corresponding one of squibs 2 and a terminal voltage of the corresponding one of the squibs at that time is read by control circuit 22 via a line M4 and an amplifier 15. The measured voltage is converted into a resistance value to diagnose normality and abnormality of each of the squibs 2.

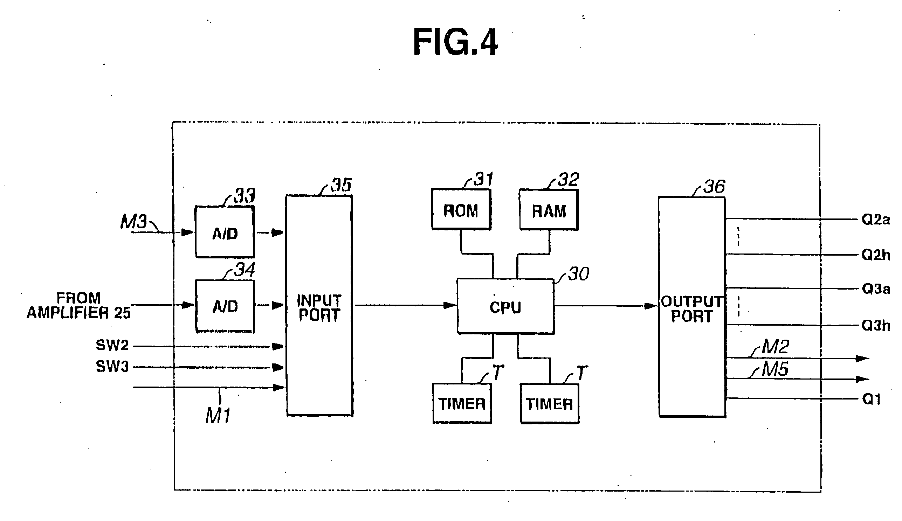

Control circuit 22, as shown in Fig. 4, includes: a CPU (Central Processing Unit); a ROM (Read Only Memory) 31 in which a system program, a high reference voltage value Vh as will be described later, a low reference voltage V1, a charge voltage of capacitor C whose value is varied in accordance with a resistance value of each squib, a deployment time (duration), and so forth; a RAM (Random Access Memory) 32; a plurality of timers T, T; an analog-to-digital converter (A/D) 33, 34; an input port 35; and an output port 36. It is noted that ROM 31 may be constituted by, for example, EPROM (Erasable Program Read Only Memory), RAM 32 may be constituted by, for example, DRAM (Dynamic Random Access Memory), and other kinds of memories (for example, an EEPROM (Electrically Erasable Programmable Read Only Memory), a SRAM (Static Random Access Memory), and a flash memory) may arbitrarily be used. It is noted that a charge circuit is constituted by booster 21 and a switching transistor Q1.

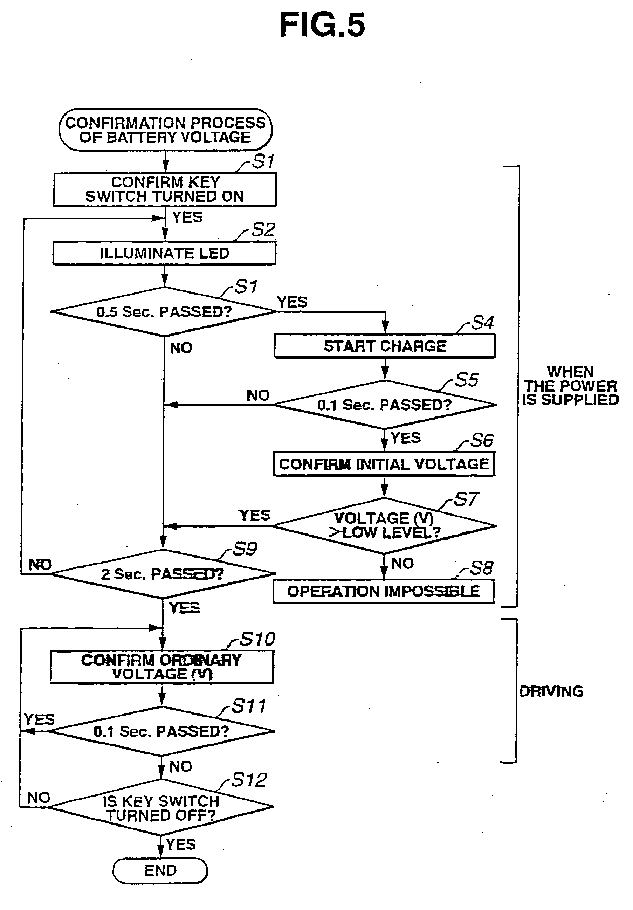

Next, an operation of vehicular occupant protection device deployment apparatus 1 described above will be described below. Vehicular occupant protection device deployment apparatus 1 basically performs a battery voltage confirmation process shown in Fig. 5 and a squib diagnosis-and-deployment process shown in Fig. 5.

(Battery voltage confirmation process)
Fig. 5 shows a flowchart representing the battery voltage confirmation process. The battery voltage confirmation process will be described below with reference to Fig. 5- In order to supply the electric power, when operation of mode select switch operational piece 4 causes switch SW1 to be turned to ON (a step S1), all of display lamps 7 are illuminated (turned to ON) to confirm operations of display lamps 7 (a step S2). It is noted that an illumination time (duration) of display lamps 7 is for two seconds in this embodiment. This illumination time (duration) is managed by one of timers T. The time management in the battery voltage confirmation process and the time management of the squib diagnosis-and-deployment process are carried out by timers T.

Next, after switch SW1 is turned to ON, control circuit 22 determines whether 0.5 seconds have passed from a time at which switch SW1 is turned to ON at a step S3. If 0.5 seconds have passed (Yes), the routine goes to a step S4. At step S4, a charge of capacitor C is started. It is noted that, in an initial state in which the power is supplied to the apparatus 1, booster 21 is in a voltage boost disabled (not allowed) state and switching transistor Q1 is in the OFF state. In addition, each switching transistor Q2 is in the OFF state. When 0.5 seconds have passed, control circuit 22 supplies the voltage boost allowance (enabling) signal to booster 21 so that booster 21 is in a boost enabled state and turns switching transistor Q1 to ON- Thus, the boosted voltage is applied to capacitor C to start the charging of capacitor C.

Next, at a step S5, control circuit 22 determines whether 0.1 seconds have passed. If 0.1 seconds have passed (Yes), the routine goes to a step S6 at which control circuit 22 confirms an initial voltage of battery power supply 20. Specifically, when a detected voltage value V is supplied to control circuit 22 (accurately, CPU 30 within control circuit 22) via a line M1, CPU 30 within control circuit 22 reads a preset high reference voltage Vh and a preset low reference voltage vl from ROM 31 and performs a comparison between detected voltage value v and both of high reference voltage value vh and low reference voltage value V1.

It is noted that, in this embodiment, high reference voltage value Vh is preset to 4.8 volts (V) (nominal voltage (= 1.2 x 4 V) of battery power supply 20) and low reference voltage V1 is preset to 4.6 V.

Then, if a result of comparison is such that detected voltage value V > high reference voltage value Vh, control circuit 22 determines that the battery power supply 20 is normal (operation enabling state) and illuminates power supply purpose display lamp 7i in green. If high reference voltage value Vh ≥ detected voltage value v > low reference voltage value V1, control circuit 22 determines an insufficient voltage (however, in the operation enabling state) and illuminates power supply purpose display lamp 7i in the orange color. If low reference voltage value V1 ≥ detected voltage value V (No), control circuit 22 determines the insufficient voltage (operation disabling state) and illuminates power supply purpose display lamp 7i in red. Thus, the operator can visually inspect a capacity state of battery power supply 20.

In addition, the charge of capacitor C is carried out with booster 21 operated during the power supply turned on. Hence, the battery power supply voltage during an actual use of vehicular occupant protection device deployment apparatus 1 can be confirmed. However, for example, in a case where the voltage of battery power supply 20 only during the driving operation is detected, control circuit 22 determines the voltage of battery power supply 20 only from the voltage of battery power supply 20 even though a remaining capacity of battery power supply 20 is small- Therefore, control circuit 22 erroneously determines that the battery power supply 20 is normal, the charge voltage is reduced, and the insufficient charge occurs so that the deployment process thereof is not carried out. However, in the case of this embodiment, the charge to capacitor C with booster 21 operated before the driving start is carried out. Hence, the voltage of battery power supply 20 during the actual use is detected. Thus, such an event that the insufficient charge occurs during the deployment process after the charging to capacitor C can be avoided.

It is noted that, at step S7, control circuit 22 determines that low reference voltage value V1 ≥ detected voltage value V and determines that the voltage is insufficient (operation disabled state(operation is impossible)) (at a step S8). Specifically, such a process that the voltage boost allowance signal is not supplied to booster 21 is carried out. Thus, in this state, the deployment process is not executed even if operational button 6 is pushed.

It is noted that, as will be described later, in the battery voltage confirmation process during the driving, even if low reference voltage value V1 ≥ detected voltage value V and insufficient voltage is determined (operation disabled state), the operation enabled state is determined by control circuit 22 in a case where the detected voltage value V is recovered to be higher than low reference voltage value V1. On the other hand, in the initial voltage confirmation process at the time at which the power is supplied to apparatus 1, the operation disabling state is continued even if the voltage is, thereafter, recovered to low reference voltage value V1 or higher. Thus, an erroneous operation of the voltage confirmation of battery power supply 20 during the actual use can be prevented.

Next, if 2 seconds have passed, the routine goes from a step S9 to a step S10. During the squib deployment process, the ordinary voltage confirmation process during the driving for each of 0.1 seconds is carried out at steps S10, S11. Specifically, in the same way as the initial voltage confirmation process, the comparison between detected voltage value V and both of high reference voltage value Vh and low reference voltage value V1 is carried out. If detected voltage value V > high reference voltage value vh, control circuit 22 determines that battery power supply 20 is normal (operation enabling state) and illuminates power supply purpose display lamp 7i in green. If high reference voltage value Vh ≥ detected voltage value V > low reference voltage value V1, control circuit 22 determines that the voltage of battery power supply 20 is insufficient (however, the operation enabling state) and illuminates power supply purpose display lamp 7i in the orange color. If low reference voltage value V1 ≥ detected voltage value v, control circuit 22 determines that the voltage of battery power supply 20 is insufficient (operation disabling state) and illuminates power supply purpose display lamp 7i in red. It is noted that, as described above, even if low reference voltage value V1 ≥ detected voltage value V and control circuit 22 determines that the voltage of power supply 20 is insufficient (operation disabling state), control circuit 22 determines the operation enabling state in a case where the voltage thereof is recovered to be higher than low reference voltage value V1. Thus, the deployment process can be continued.

Then, if switch SW1 is turned to OFF, the voltage confirmation process of battery power supply 20 is finished (a step S12).

(squib diagnosis-and-deployment process)

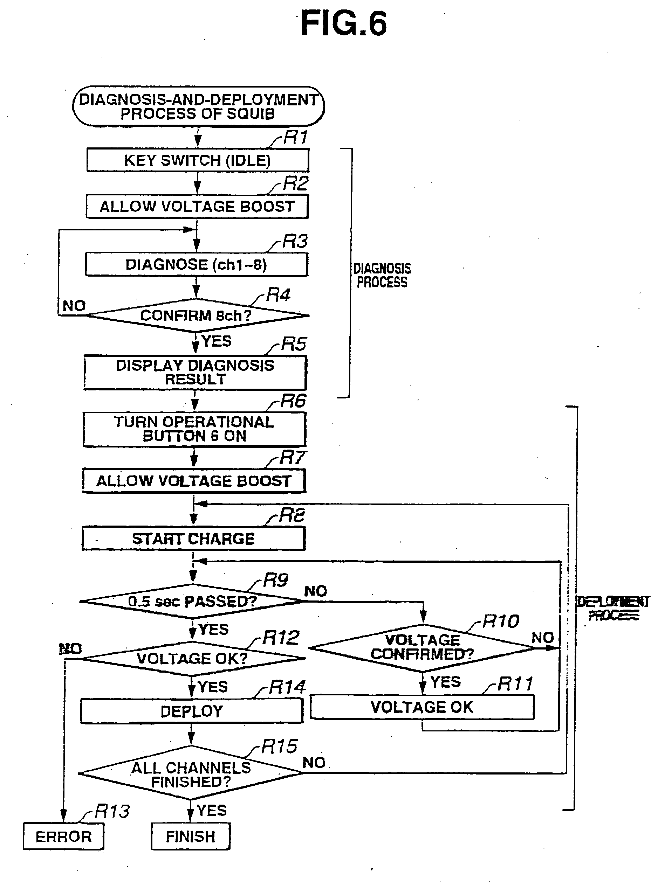

Fig. 6 shows a squib diagnosis-and-deployment process flowchart. With reference to Fig. 6, the squib diagnosis-and-deployment process will be described below.

When switch SW2 is turned to ON (at a step R1), control circuit 22 outputs the voltage boosting allowance signal to booster 21 to enable booster 21 to be operated, (a step R2).

Next, in a closed loop of step R3 → step R4 → step R3, the diagnosis process is executed for all of squibs 2 sequentially. Specific explanation is herein made. First, the diagnosis of squibs 2a is carried out. When the diagnosis is carried out, control circuit 22 makes booster 21 in the voltage boost enabled state, switching transistor Q1 is turned to OFF and all switching transistors Q2 are turned to OFF. Furthermore, switching transistor Q3a is turned to ON and other switching transistors Q3b through Q3h are turned to OFF. Thus, the output from booster 21 is in the constant current state via current regulative diode D3 and this constant current is supplied to corresponding squib 2a. If the terminal voltage of squib 2a is measured via a corresponding one of lines M4, the resistance value of squib 2a can be converted from the measured voltage. Consequently, the resistance value of squib 2a can be recognized by control circuit 22.

In this embodiment, in order to improve a measurement accuracy, the measured voltage of squib 2a is amplified by means of an amplifier 25 and is supplied to control circuit 22. Control circuit 22 calculates the resistance value of squib 2a to carry out the diagnosis of the normality and abnormality of squib 2a. Then, the above-described squib diagnosis process is carried out for all of squibs 2a through 2h with only the corresponding switching transistor Q3a through Q3h turned to ON. When the diagnoses for all squibs 2a through 2h are finished, the routine shown in Fig. 6 goes to a step R5 and the diagnosis result is displayed through corresponding squib purpose display lamps 7a through 7h. The diagnosis result display is as follows: If the squib is normal for each of squib purpose display lamp 7a through 7h, the corresponding one of squib purpose display lamps 7a through 7h is illuminated in green. If the squib is short-circuited (resistance value thereof is approximately zero), the corresponding one of squib purpose display lamps 7a through 7h is displayed in red. If the squib is open , the corresponding one of squib purpose display lamps 7a through 7b is turned off to indicate that the resistance value thereof is approximately infinite.

Next, according to the result of diagnosis, the deployment process for the squib which is determined to be normal is carried out. Specifically, when operational button 6 is pushed to turn switch SW3 to ON (a step R6), the deployment process is started. Next, at a step R7, the voltage boosting allowance signal is supplied to booster 21 so that booster 21 becomes the voltage boost enabling state. Next, at a step R8, the charge of capacitor C is started. That is to say, switching transistor Q1 is turned to ON and all of switching transistors Q2 are turned to OFF. Thus, the charge of capacitor C is started.

Then, control circuit 22 determines whether 0.5 seconds have passed from the start of charge at a step R9- If 0.5 seconds have not passed, the routine goes to a step R10 at which the charged voltage of capacitor C is confirmed. Specifically, control circuit 22 detects the charged voltage of capacitor C via line M1. Then, according to a closed loop process of step R9 → step R10 → step R10 → step R11 → step R9, the charge operation is continued until capacitor C provides a predetermined voltage within 0.5 seconds from the start of charging.

It is noted that the charge voltage of capacitor C and the deployment process as will be described later are variable in accordance with the resistance value of squib 2 obtained by means of the squib diagnosis process. In mode details, squibs 2 used in this embodiment have two kinds of an air bag ayatam (irrespective of the driver seat, the passenger seat, and driver seat side) and a pretensioner system (irrespective of the driver seat and the passenger seat). The resistance values of air bag system squibs 2 (the resistance value of each air bag system squib is 2 ohms) and pretensioner system squibs 2 (the resistance value of each of pretensioner system is 2.15 ohms) are different from each other. Thus, the charge voltage of capacitor C and deployment time (duration) as will be described later are varied, the drive time of booster 21 can be shortened and the consumption of the battery power supply 20 can be saved.

Specifically, according to the air bag system squib and the pretensioner system squib, the charge voltage and deployment time are set as shown in Table 1. It is noted that, as described above, the charge voltage and deployment time are stored in a table format in ROM 31 and these charge voltages and deployment times are read by CPU 30 when the charge operation for capacitor C and deployment process are carried out and a predetermined process is carried out.

**Table 1**

| resistance value (ohms) | charge voltage (V) | deployment time (mS) | deployment current (A) | |
|---|---|---|---|---|
| 2.00 | 4.6 | 2 | 1.75 | air bag system |
| 2.15 | 5.0 | 1 | 2.00 | pre-tensioner system |

That is to say, in the case of squib of 2 ohms, it is necessary to continue to flow the current at least equal to or higher than 1.75 A for 2 milliseconds (mS) through the squib for the deployment process. To achieve this, the charge voltage of capacitor C requires 4.6 volts. It is noted that, when the charge voltage is calculated, a capacitance of capacitor C is assumed to be 3300 microfarads (µF). In the same way as described above, in the case of 2.15 ohm squib, it is necessary to continue to cause the current of at least 2.0 A to flow through the 2.15 ohm squib for 1 millisecond (mSec) for the deployment process. To achieve this, the charge voltage of capacitor C requires 5.0 volts.

In the confirmation process of the charge voltage of capacitor C at step R10. the charge voltage of capacitor C is detected. In the case of air bag system squib, when the charge voltage has reached to 4.6 volts, the voltage boosting allowance signal to booster 21 is stopped and the drive of booster 21 is stopped. In the case of pretensioner system squib, when the charge voltage has reached to 5.0 volts (V), the voltage boosting allowance signal to booster 21 is stopped and the drive of booster 21 is stopped.

Next, if 0.5 seconds have passed, the routine goes from step R9 to a step R12. At step R12. control circuit 22 determines whether the voltage across capacitor C is the predetermined value. If the voltage across capacitor C is not the predetermined voltage, control circuit 22 determines that the squib is not normal and determines that the deployment process is not carried out (at a step R13).

At step R12, the voltage across capacitor C is the predetermined voltage. In this case, the routine goes to a step R14. At step R14, the deployment process is carried out. That is to say, the deployment process is carried out only for the normal squib. During the deployment process, switching transistor Q1 is turned to OFF and one of switching transistors Q2 which corresponds to the squib through which the current is caused to flow is turned to ON. Then, as described above, the deployment time (duration) is varied in accordance with the resistance value of the squib.

Next, at a step R15, control circuit 22 determines whether the deployment process for all of normal squibs are finished. If not finished, the routine returns to step R9. It is noted that the deployment process is carried out with switching transistor Q1 turned to OFF and one of the switching transistors Q2 which corresponds to the squib to be deployed from among the plurality of squibs turned to ON.

As described above, according to a series of processing of steps R9 through R16, the deployment processes for all of the normal (determined to be normal) squibs are sequentially executed.

It is noted that the deployment can be achieved even if capacitor C is charged with the same voltage (for example, approximately 10 volts) for all squibs and the deployment of the same deployment time (2 mSec) is carried out irrespective of the differences in the resistance values of the squibs. However, in such a process method as described above, the booster is activated more than necessity and the electric power of battery power supply 20 is wastefully consumed. On the other hand, in the case of the preferred embodiment, the charge voltage and deployment time duration are varied according to the respective resistance values of the squibs. Thus, an electrical discharge quantity of an electricity across capacitor C can be suppressed. A drive time of booster 21 in the case where the electricity is again charged can be shortened and a consumption of the battery can be reduced.

(Other matters)
In the above-described embodiment, the resistance values of the squibs have two kinds (the air bag system squibs and the pretensioner system squibs) but may have three kinds or more. Although the charge voltage and deployment time are switched between two values, respectively, in the case of the squibs having three or more different kinds of resistance values, the charge voltage and the deployment time may be varied in accordance with these different resistance values. It is noted that low reference voltage V1 described above means a predetermined voltage required at minimum for the deployment process. It is noted that channels described in Fig. 6 means a series of squibs 2 in this embodiment.

The present invention is suitable for the vehicular occupant protection device deployment apparatus which collectively deploys a plurality of squibs.

## Claims

1. A vehicular occupant protection device deployment apparatus (1), comprising:
at least one squib (z) ;
a battery power supply (20);
a capacitor (C) to supply a squib ignition purpose voltage for the squib for the vehicular occupant protection device deployment apparatus to carry out a deployment process of the vehicular occupant protection device;
a charge circuit (D1, D2, 21, Q1) to boost a voltage across the battery power supply and charge the capacitor with the boosted voltage;
a battery voltage detecting section (M1, 22) that detects the voltage across the battery power supply; and
a control section (22) to operate the charge circuit and input a detected voltage value (V) of the battery power supply from the battery power supply detecting section when an electric power is supplied to the apparatus and to confirm whether the voltage across the battery power supply during an operation state of the charge circuit obtained by the battery voltage detecting section is higher than a predetermined voltage (V1) required at minimum for the deployment process.

2. A vehicular occupant protection device deployment apparatus as claimed in claim 1, wherein the vehicular occupant protection device deployment apparatus (1) includes a display section (7) that displays an insufficient voltage of the battery power supply (20) and the control section drives the display section to display the insufficient voltage of the battery power supply (20) when the control section confirms that the detected voltage value (V) across the battery power supply obtained by the battery voltage detecting section is equal to or lower than the predetermined voltage (V1).

3. A vehicular occupant protection device deployment apparatus as claimed in either claim 1 or 2, wherein the control section inhibits the deployment process when the control section confirms that the detected voltage value (V) across the battery power supply obtained by the battery voltage detecting section is equal to or lower than the predetermined voltage (V1).

4. A vehicular occupant protection device deployment apparatus as claimed in any one of the preceding claims 1 through 3. wherein the battery voltage detecting section comprises a control circuit (22) which detects the voltage across the battery power supply from a voltage value (V) across the capacitor (C) after a first predetermined time has passed from a time at which the electric power is supplied to the vehicular occupant protection device (1) .

5. A vehicular occupant protection device deployment apparatus as claimed in any one of the preceding claims 1 through 4, wherein the control section (22) operates the charge circuit after a second predetermined time has passed from the time at which the electric power is supplied to the apparatus (1), the second predetermined time being shorter than the first predetermined time.

6. A vehicular occupant protection device deployment apparatus as claimed in any one of the preceding claims 1 through 5, wherein the display section (7) displays the insufficient voltage of the battery power supply but an operation enabling state when the voltage value (V) across the battery power supply obtained by the battery voltage detecting section is another predetermined voltage (Vh) ≥ detected voltage value (V) > the predetermined voltage (V1).

7. A vehicular occupant protection device deployment apparatus as claimed in any one of the preceding claims 1 through 6, wherein the display section (7) displays a sufficient voltage of the battery power supply when the detected voltage value (v) is higher than another predetermined voltage (Vh) which is higher than the predetermined voltage (V1).

8. A vehicular occupant protection device deployment apparatus as claimed in any one of the preceding claims 1 through 7, wherein the control section (22) confirms whether the voltage across the battery power supply during the operation state of the charge circuit obtained by the battery voltage detecting section is higher than the predetermined voltage (V1) during the deployment process after a third predetermined time has passed from the time at which the electric power is supplied to the vehicular occupant protection device deployment apparatus unless the electric power is supplied to the vehicular occupant protection device deployment apparatus.

9. A vehicular occupant protection device deployment apparatus as claimed in any one of the preceding claims 1 through 8, wherein the display section comprises a display lamp (7i) which is illuminated in green when the detected voltage value (V) of the battery power supply obtained by the battery voltage detecting section is higher than the other predetermined voltage, illuminated in an orange color when the detected voltage value (V) of the battery power supply obtained by the battery voltage detecting section is between the other predetermined voltage (Vh) and the predetermined voltage (V1), and illuminated in red when the detected voltage value of the battery power supply obtained by the battery voltage detecting section is equal to or lower than the predetermined voltage (V1).

10. A vehicular occupant protection device deployment apparatus as claimed in any one of the preceding claims 1 through 9. wherein the charge circuit comprises: a booster (21) to operatively boost the voltage of the battery power supply (20); a diode (D2); and a switching transistor (Q1) which is turned on in response to a signal from the control circuit (22) when the voltage value across the capacitor (C) is detected to detect the voltage (V) across the battery power supply (20).

11. A vehicular occupant protection device deployment apparatus as claimed in claim 10, wherein the squib comprises a plurality of squibs (2a through 2h) in a vehicular air bag system and in a vehicular pretensioner system and wherein the control section further carries out a squib diagnosis process to diagnose normality and abnormality of each of the squibs.

12. A vehicular occupant protection device deployment apparatus as claimed in claim 11, wherein, when the control section carries out the squib diagnosis process, the control section causes a constant current to flow through each of the squibs sequentially to recognize a resistance value of each of the squibs.

13. A vehicular occupant protection device deployment apparatus as claimed in claim 12, wherein a plurality of display lamps (7a through 7h) are provided in the apparatus (1) and wherein, when the resistance value of one of the squibs is recognized by the control section to be approximately zero, the corresponding one of the display lamps is illuminated in red to indicate that the squib is short-circuited. when the resistance value of one of the squibs is recognized by the control section to be approximately infinite, the corresponding one of the display lamps is turned off to indicate that the corresponding one of the squibs is open, and, when the resistance value of one of the squibs is recognized by the control section to be approximately within a prescribed value, the corresponding one of the display lamps is illuminated in green to indicate that the corresponding one of the squibs is normal.

14. A vehicular occupant restraint deployment apparatus as claimed in claim 13, wherein the control section carries out the deployment process for any one or more of the squibs which are recognized to be normal and a charged voltage across the capacitor and a deployment time are varied according to the corresponding one of the scribes which are recognized to be normal.

15. A battery voltage confirming method for a vehicular occupant protection device deployment apparatus (1), the vehicular occupant protection device deployment apparatus comprising: a battery power supply (20); a capacitor (C); and a charge circuit (21, D1, Q1) which boosts the voltage of the battery power supply and charges the capacitor with the boosted voltage; a control section that performs a deployment process of the vehicular occupant protection device by supplying a squib ignition purpose voltage to a connected squib and the battery confirming method comprising:
operating the charge circuit at a time at which an electric power is supplied to the apparatus (1);
detecting a voltage across the battery power supply (20) during the operation of the charge circuit; and
confirming whether the detected voltage across the battery is higher than a predetermined voltage (V1) required at minimum for the deployment process.
